# EUROPÄISCHE PATENTSCHRIFT

(11) **EP 0 671 743 B1**
(45) Veröffentlichungstag und Bekanntmachung des Hinweises auf die Patenterteilung: **25.08.1999**
(21) Anmeldenummer: 95103069.1
(22) Anmeldetag: 03.03.1995
(51) Int. Cl.: G11B 33/04

(54) **Aufnahmeeinrichtung für einen scheibenförmigen Datenträger**
Holding device for disc-type data carrier
Dispositif de maintien pour support d'information en forme de disque

(30) Priorität: 08.03.1994 DE 9403885 U
(43) Veröffentlichungstag der Anmeldung: 13.09.1995
(73) Patentinhaber: Naatz, Joachim, D-24558 Henstedt-Ulzburg (DE); Foerster, Fritz, D-24558 Henstedt-Ulzburg (DE)
(72) Erfinder: Naatz, Joachim, D-24558 Henstedt-Ulzburg (DE); Foerster, Fritz, D-24558 Henstedt-Ulzburg (DE)
(74) Vertreter: Haug, Dietmar, Dipl.-Ing.

(56) Entgegenhaltungen:
- EP-A- 0 272 042
- EP-A- 0 330 292
- DE-C- 144 596

## Beschreibung

Die Erfindung betrifft eine Aufnahmeeinrichtung für einen scheibenförmigen Datenträger, insbesondere für eine Compact-Disk (CD), mit einem Gehäuseboden, an dem ein Gehäusedeckel schwenkbeweglich angeordnet ist, und mit einer den Datenträger aufnehmenden Aufnahmemulde, wobei Arretiermittel für den Datenträger und den Gehäusedeckel vorgesehen sind.

Zur Aufbewahrung von Compact-Disks (CD) ist eine derartige Aufnahmeeinrichtung bekannt, bei der der Gehäuseboden einen mit einer Aufnahmemulde versehenen Einsatz aufnimmt. Die Aufnahmemulde dient der Aufnahme der Compact-Disk und besitzt einen etwas größeren Umfang als der Außenumfang der Compact-Disk. Im Zentrum der Aufnahmemulde ist eine Zentralarretierung für die Compact-Disk vorgesehen. Die Zentralarretierung besteht bei der bekannten Aufnahmeeinrichtung aus einer Vielzahl von federnden Haltenocken, die auf einer Kreislinie mit Abstand zueinander angeordnet sind. Die Haltenocken hintergreifen die an der Compact-Disk vorgesehene Zentralöffnung. Zur Entnahme der Compact-Disk muß zunächst der Gehäusedeckel der Aufnahmeeinrichtung geöffnet werden, der mit dem Gehäuseboden arretiert ist. Nachfolgend wird zur Entnahme der Compact-Disk aus der Aufnahmeeinrichtung die Zentralarretierung durch Fingerdruck gelöst. Mit der anderen Hand kann dann die Compact-Disk aus der Aufnahmemulde entnommen werden. Häufig ist die Zentralarretierung relativ fest, so daß sich die Compact-Disk bei der Entnahme durchbiegt und weiterhin die Gefahr des Entgleitens oder der Beschädigung besteht.

Ausgehend hiervon liegt der Erfindung die Aufgabe zugrunde, eine Aufnahmeeinrichtung vorzuschlagen, bei der die Bedienbarkeit erleichtert ist.

Zur Lösung dieser Aufgabe wird bei einer gattungsgemäßen Aufnahmeeinrichtung vorgeschlagen, daß die Arretiermittel eine betätigbare Arretiertaste und ein Zentralhalteelement aufweisen, daß die Arretiertaste Halteelemente aufweist, wobei in ihrer Schließstellung ein erstes Halteelement am Außenrand des Datenträgers anliegt und ein zweites Halteelement den Gehäusedeckel geschlossen hält, und daß das Zentralhalteelement an einem Innenrandbereich des Datenträgers anliegt und derart ausgebildet ist, daß in Offenstellung der Arretiertaste der Datenträger vom Zentralhalteelement lösbar ist.

Bei der erfindungsgemäßen Aufnahmeeinrichtung ist die Bedienung erleichtert, da die manuell betätigbare Arretiertaste gleichzeitig den Gehäusedeckel freigibt und den scheibenförmigen Datenträger zur Entnahme löst. Durch die vorgesehene Arretiertaste kann mit einer Hand das Halten der Aufnahmeeinrichtung und die Betätigung der Arretiertaste erfolgen. In der Öffnungsstellung der Arretiertaste kann dann der scheibenförmige Datenträger leicht aus der Aufnahmemulde entnommen werden, ohne daß hierbei Verformungen an dem Datenträger auftreten. In der Schließstellung der Arretiertaste wird der Datenträger sicher zwischen dem Zentralhalthalteelement und der Arretiertaste gehalten, denn das Zentralhalteelement und das erste Halteelement liegen an dem Datenträger an. Somit wird eine gute Fixierung des Datenträgers erreicht. Außerdem liegt in der Schließstellung der Arretiertaste das zweite Halteelement am Gehäusedeckel an, wodurch auch dieser fixiert wird. Vorzugsweise sind die beiden Halteelemente an der Arretiertaste angeformt.

Vorteilhafte Ausgestaltungen der Erfindung sind in den Unteransprüchen aufgeführt.

Vorteilhaft ist die Arretiertaste an einem Einsatz angeordnet, der in dem Gehäuseboden aufgenommen wird und an dem die Aufnahmemulde ausgeformt ist. Derartige Einsätze sind prinzipiell bei den bekannten Aufnahmeeinrichtungen für Compact-Disks bekannt.

In Weiterbildung wird vorgeschlagen, daß die Arretiertaste federnd am Einsatz angeordnet ist und vorzugsweise einstückig mit dem Einsatz ausgebildet ist. Hierdurch wird eine besonders einfache und kostengünstige Herstellung der Aufnahmeeinrichtung erreicht. Die federnde Anordnung der Arretiertaste kann durch konstruktive Maßnahmen und/oder durch Einsatz von elastischen Materialien erfolgen.

In weiterer Ausgestaltung kann die Arretiertaste an einem Eckbereich des Gehäusebodens angeordnet sein und eine näherungsweise dreieckförmige Grundform aufweisen. Diese Anordnung der Arretiertaste trägt ebenfalls zur einfachen Bedienbarkeit bei, da hierdurch eine relativ großflächige Arretiertaste geschaffen werden kann.

In Weiterbildung wird vorgeschlagen, daß das erste Halteelement für den Datenträger im Querschnitt im wesentlichen spiegelbildlich zu dem Zentralhalteelement ausgebildet ist.

Vorteilhaft weist der Randbereich der Halteelemente eine abgerundete Außenkante auf. Hierdurch wird ein leichtgängiger Verschluß erhalten, wodurch der Verschleiß verringert ist.

Vorteilhaft ist im Zentralbereich der Aufnahmemulde ein Führungselement vorgesehen, das eine schrägverlaufende Gleitrampe für den Datenträger besitzt. Hierdurch wird das Einführen des Datenträgers in die Aufnahmemulde erleichtert.

Vorteilhaft ist das Führungselement diametral zum Zentralhalteelement angeordnet.

In weiterer Ausgestaltung weist die Arretiertaste an ihrer Oberseite eine Griffmulde und/oder an ihrer Unterseite mindestens eine Verstärkungsrippe auf.

Nachfolgend wird die Erfindung anhand eines Ausführungsbeispielen beschrieben, das in schematischer Weise in der Zeichnung dargestellt ist. Hierin zeigen:
- Fig. 1: Eine Draufsicht auf eine erste Ausführungsform der Erfindung bei geöffnetem Gehäusedeckel,
- Fig. 2: den Schnitt längs der Linie II-II in Fig. 1,
- Fig. 3: eine vergrößerte Darstellung der Einzelheit III in Fig. 2, und
- Fig. 4: eine ähnliche Darstellung wie in Fig. 3, bei der sich die Arretiertaste in Offenstellung befindet.

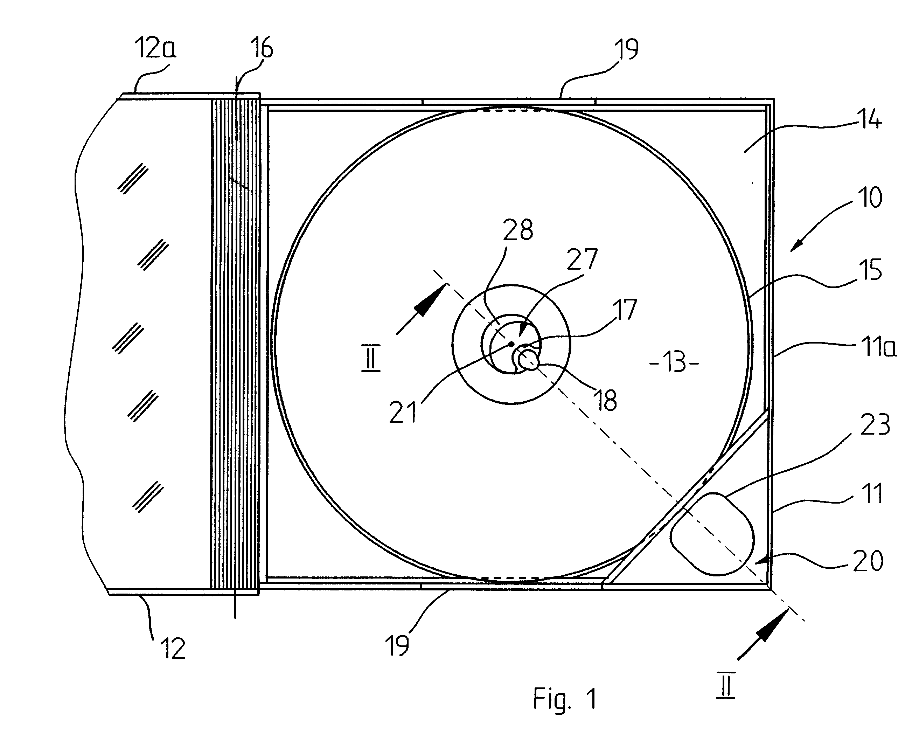

Die in Fig. 1 dargestellte Aufnahmeeinrichtung 10 dient der Aufbewahrung eines scheibenförmigen Datenträgers 13, der bei diesem Ausführungsbeispiel eine Compact-Disk (CD) ist.
Ebenso kann die Aufnahmeeinrichtung 10 aber auch bei ähnlichen Datenträgern, beispielsweise Optical-Disks oder dergleichen, zum Einsatz kommen. Nachfolgend wird der Datenträger 13 zur Vereinfachung als CD bezeichnet.

Die Aufnahmeeinrichtung 10 besitzt einen Gehäuseboden 11, der eine rechteckförmige Grundform aufweist. Im Randbereich des Gehäusebodens 11 ist eine von der Bodenfläche senkrecht abragende Randeinfassung lla vorgesehen. Der Gehäuseboden 11 dient der Aufnahme eines Einsatzes 14, der mit einer Aufnahmemulde 15 für die CD 13 versehen ist. Der Innendurchmesser der Aufnahmemulde ist etwas größer als der Außendurchmesser der CD 13 ausgebildet.

Bereichsweise sind an der Randeinfassung 11a Aussparungen 19 vorgesehen. Die CD 13 liegt in ihrer eingelegten Position in den Aussparungen 19 ein.

Mittels an der Randeinfassung 11a vorgesehenen Scharnieren 16 ist ein Gehäusedeckel 12 schwenkbeweglich an dem Gehäuseboden 11 angeordnet. Hierzu weist der Gehäusedeckel 12 Randwangen 12a auf, an denen die Festlegung am Gehäuseboden 11 erfolgt.

Bei dem dargestellten Ausführungsbeispiel ist sowohl der Gehäuseboden 11 als auch der Gehäusedeckel 12 aus Kunststoff hergestellt. Hierbei kann ein transparentes Kunststoffmaterial Verwendung finden.

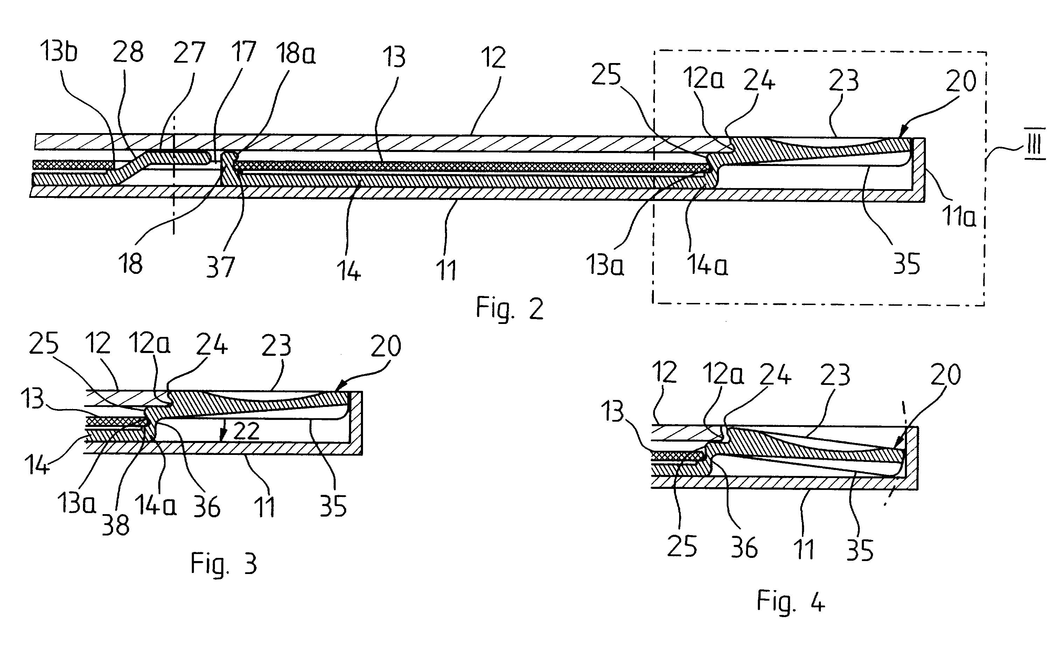

Wie auch aus Fig. 2 hervorgeht, die einen Schnitt längs der Linie II-II in Fig. 1 zeigt, ist mit Abstand zu einem Zentrum 21 der Aufnahmemulde 15 ein Zentralhalteelement 18 vorgesehen, das an den Einsatz 14 angeformt ist. Das Zentralhalteelement 18 ragt senkrecht von der Oberfläche des Einsatzes 14 ab. An dem Zentralhalteelement 18 ist ein vergrößerter Kopfbereich 18a angeformt. In der eingelegten Position der CD 13 übergreift der Kopfbereich 18a den inneren Randbereich 13b der CD 13.

Diametral zum Zentralhalteelement 18 ist ein Führungselement 27 vorgesehen, das ebenfalls an den Einsatz 14 angeformt ist. Das Führungselement 27 weist eine schrägverlaufende Gleitrampe 28 für die CD 13 auf.

An dem Sockelbereich des Führungselementes 27 und des Zentralhaltelementes 18 ist eine kreisringförmige Auflage 37 angeformt. Wie aus Fig. 2 hervorgeht, liegt der Randbereich 13b der CD 13 auf der Auflage 37 auf.

An einem Eckbereich des Einsatzes 14 ist eine Arretiertaste 20 vorgesehen, die eine näherungsweise dreieckförmige Grundform aufweist. Die Arretiertaste 20 dient sowohl der Arretierung der CD 13 als auch des Gehäusedeckels 12.

Wie aus den Fig. 2 und 3 hervorgeht, ist die Arretiertaste 20 an einem Randbereich 14a des Einsatzes 14 angeformt. Somit sind die Arretiertaste 20 und der Einsatz 14 als gemeinsames Formteil ausgebildet. Die Arretiertaste 20 weist eine näherungsweise dreieckförmige Grundform auf, die im Eckbereich des Gehäusebodens 11 einliegt. Somit wird eine relativ großflächige Arretiertaste 20 erhalten.

Wie aus Fig. 3 hervorgeht, die eine vergrößerte Darstellung der Einzelheit III in Fig. 2 zeigt, ist oberhalb des Randbereiches 14a ein Biegebereich 36 vorgesehen. Die Arretiertaste 20 ist somit in Richtung eines Pfeiles 22 um den Biegebereich 36 schwenkbar. Um dies zu ermöglichen, wird zur Herstellung des die Arretiertaste 20 und den Einsatz 14 bildenden Formteiles ein flexibler, elastischer Kunststoff verwendet.

In die Oberseite der Arretiertaste 20 ist eine Griffmulde 23 eingeformt. An der Unterseite sind beabstandete Verstärkungsrippen 35 vorgesehen. Die Verstärkungsrippen 35 verhindern ein zu starkes Durchbiegen der Arretiertaste 20 bei deren Betätigung. Weiterhin dienen die Verstärkungsrippen 35 als Anschlag zur Begrenzung der Schwenkbewegung der Arretiertaste 20.

An einer der CD 13 bzw. dem Gehäusedeckel 12 zugewandten Stirnseite der Arretiertaste 20 sind Haltelemente 24, 25 angeformt. Hierbei ist das Halteelement 24 dem Gehäusedeckel 12 und das Halteelement 25 der CD 13 zugeordnet. Die stufenförmig angeordneten Halteelemente 24, 25 besitzen jeweils eine abgerundete Außenkontur, wodurch die Funktionsweise der Arretierung verbessert wird und gleichzeitig der Verschleiß verringert wird.

Das Halteelement 24 liegt in der Schließstellung des Gehäusedeckels 12 an dessen schrägverlaufender Randkante 12a an. Somit übergreift das Haltelement 24 auf seiner gesamten Breite die Randkante 12a des Gehäusedeckels 12.

In prinzipiell ähnlicher Weise übergreift das Halteelement 25 in der Schließstellung der Arretiertaste 20 einen äußeren Randbereich 13a der CD 13.

Wie aus Fig. 2 hervorgeht, ist das Halteelement 25 im Querschnitt im wesentlichen spiegelbildlich zu dem Zentralhalteelement 18 ausgeformt. Die radial innere Begrenzungsfläche des Halteelements 25 folgt in Umfangsrichtung einem Kreisbogensegment. Die CD 13 wird in ihrer eingelegten Position zwischen dem Zentralhalteelement 18 und der Arretiertaste 20 fixiert. Die Arretiertaste 20 und das Zentralhalteelement 18 stellen somit fast eine Zweipunktfixierung der CD 13 dar, wobei das Halteelement 25 auf seiner gesamten Breite den Rand der CD 13 übergreift. Hierdurch wird diese in der Schließstellung der Arretiertaste 20 sicher und verwindungs-frei in allen Richtungen gehalten.

Nachfolgend soll die Funktionsweise der Aufnahmeeinrichtung 10 beschrieben werden.

Zum Öffnen des Gehäusedeckels 12 wird die Arretiertaste 20 in Richtung des Pfeiles 22 betätigt, so daß das Halteelement 24 von der Randkante 12a weggeschwenkt wird. Diese Stellung der Arretiertaste 20 ist in Fig. 4 dargestellt.

Nachdem die Randkante 12a des Gehäusedeckels 12 freigegeben ist, kann der Gehäusedeckel 12 völlig aufgeklappt werden. Bei betätigter Arretiertaste 20 kann die CD 13 in die Aufnahmemulde 15 des Einsatzes 14 eingeführt werden. Das Zentralhalteelement 18 und das Führungselement 27 werden in einer an der CD 13 vorgesehenen Zentralöffnung 17 eingebracht. Hierbei gleitet die innere Randkante 13b der CD 13 auf der Gleitrampe 28 des Führungselementes 27.

In ihrer eingelegten Position liegt die CD 13 mit ihrem inneren Randbereich auf der Auflage 37 auf. Der äußere Randbereich der CD 13 wird an einer kreisbogensegmentförmigen Auflage 38 abgestützt, die im Bereich des Randbereiches 14a des Einsatzes 14 unterhalb des Halteelements 25 angeformt ist. Im Bereich zwischen den Auflagen 37, 38 hat die CD 13 keinen Kontakt mit der Oberseite der Aufnahmemulde 15. Eine eventuelle Verbiegung der Aufnahmeeinrichtung 10 im Bereich der Freiräume zwischen Aufnahmemulde 15 und CD 13 führt zu keiner Verwindung der CD 13.

In der Schließstellung der Arretiertaste 20, die Fig. 3 zeigt, wird die CD 13 zwischen dem Zentralhalteelement 18 und der Arretiertaste 20 fixiert. Hierbei übergreifen der Kopfbereich 18a des Zentralhalteelementes 18 und das Halteelement 25 der Arretiertaste 20 die jeweiligen Randbereiche der CD 13.

Ebenso fixiert die Arretiertaste 20 in ihrer Schließstellung den Gehäusedeckel 12, indem das Halteelement 24 die Randkante 12a des Gehäusedeckels 12 übergreift.

Zum Abklappen des Gehäusedeckels 12 und zur Entnahme der CD 13 aus der Aufnahmemulde 15 wird die Arretiertaste 20 in Richtung des Pfeiles 22 nach unten geführt (Fig. 3). Wie aus Fig. 4 hervorgeht, werden hierdurch die Halteelemente 24, 25 von dem Gehäusedeckel 12 bzw. von der CD 13 weggeführt. In dieser Offenstellung der Arretiertaste 20 kann der Gehäusedeckel 12 nach oben abgeklappt werden. Ebenfalls ist eine Entnahme der CD 13 möglich, da das Halteelement 25 von deren Randbereich 13a weggeführt ist.

Die Bedienung der Aufnahmeeinrichtung 10 ist sehr einfach, da mittels der Arretiertaste 20 die Entriegelung des Gehäusedeckels 12 und der CD 13 mit einer Hand erfolgen kann. Mit dieser Hand wird gleichzeitig auch die Aufnahmeeinrichtung 10 gehalten. Da die Arretiertaste 20 eine relativ große Grundfläche besitzt, wird die Bedienung weiter erleichtert. Während der Daumen einer Hand in der Griffmulde 23 der Arretiertaste 20 einliegt, stützen die restlichen Finger der Hand die Aufnahmeeinrichtung 10 an der Unterseite des Gehäusebodens 11 ab.

Bei gelöster Arretiertaste 20 kann mit der anderen Hand leicht der Gehäusedeckel 12 abgeklappt werden. Ebenso ist bei gelöster Arretiertaste 20 die CD 13 vom Zentralhalteelement 18 lösbar und kann aus der Aufnahmemulde 15 entnommen werden. Hierbei ist ein wesentlicher Vorteil, daß bei der Entnahme der CD 13 keinerlei Verformungen an dieser auftreten.

Die federnde Anordnung der Arretiertaste 20 an dem Einsatz 14 gewährleistet ein Verschwenken um den Biegebereich 36. Die an der Unterseite der Arretiertaste 20 angeordneten Verstärkungsrippen 35 verhindern eine durchbiegende Arretiertaste 20. Weiterhin begrenzen die Verstärkungsrippen 35 die Schwenkbewegung der Arretiertaste 20. Wie aus Fig. 4 hervorgeht, stützen sich die Verstärkungsrippen 35 in der Offenstellung der Arretiertaste 20 an dem Gehäuseboden 11 ab.

## Patentansprüche

1. Aufnahmeeinrichtung (10) für einen scheibenförmigen Datenträger (13), insbesondere eine Compact-Disk (CD), mit einem Gehäuseboden (11), an dem ein Gehäusedeckel (12) schwenkbeweglich angeordnet ist, und mit einer den Datenträger (13) aufnehmenden Aufnahmemulde (15), wobei Arretiermittel (20, 18) für den Datenträger (13) und den Gehäusedeckel (12) vorgesehen sind,
**dadurch gekennzeichnet**,
daß die Arretiermittel eine betätigbare Arretiertaste (20) und ein Zentralhalteelement (18) aufweisen,
daß die Arretiertaste (20) Halteelemente (24, 25) aufweist, wobei in ihrer Schließstellung ein erstes Halteelement (25) am Außenrand des Datenträgers (13) anliegt und ein zweites Halteelement (24) den Gehäusedeckel (12) geschlossen hält, und
daß das Zentralhalteelement (18) an einem Innenrandbereich des Datenträgers (13) anliegt und derart ausgebildet ist, daß in Offenstellung der Arretiertaste (20) der Datenträger (13) vom Zentralhalteelement (18) lösbar ist.

2. Aufnahmeeinrichtung nach Anspruch 1,
dadurch gekennzeichnet, daß die Arretiertaste (20) an einem Einsatz (14) angeordnet ist, der in dem Gehäuseboden (11) aufgenommen wird und an dem die Aufnahmemulde (15) ausgeformt ist.

3. Aufnahmeeinrichtung nach Anspruch 2,
dadurch gekennzeichnet, daß die Arretiertaste (20) federnd an dem Einsatz (14) angeordnet ist und vorzugsweise einstückig mit dem Einsatz (14) ausgebildet ist.

4. Aufnahmeeinrichtung nach einem der Ansprüche 1-3,
dadurch gekennzeichnet, daß die Arretiertaste (20) an einem Eckbereich des Gehäusebodens (11) angeordnet ist und eine näherungsweise dreieckförmige Grundform aufweist.

5. Aufnahmeeinrichtung nach einem der Ansprüche 1-4,
dadurch gekennzeichnet, daß das erste Halteelement (25) für den Datenträger (13) im Querschnitt im wesentlichen spiegelbildlich zu dem Zentralhalteelement (18) ausgebildet ist.

6. Aufnahmeeinrichtung nach einem der Ansprüche 1-5,
dadurch gekennzeichnet, daß der Randbereich der Halteelemente (24, 25) eine abgerundete Außenkante aufweist.

7. Aufnahmeeinrichtung nach einem der Ansprüche 1-6,
dadurch gekennzeichnet, daß im Zentralbereich der Aufnahmemulde (15) ein Führungselement (27) vorgesehen ist, das eine schrägverlaufende Gleitrampe (28) für den Datenträger (13) besitzt.

8. Aufnahmeeinrichtung nach Anspruch 7,
dadurch gekennzeichnet, daß das Führungselement (27) diametral zum Zentralhalteelement (18) angeordnet ist.

9. Aufnahmeeinrichtung nach einem der vorhergehenden Ansprüche,
dadurch gekennzeichnet, daß die Arretiertaste (20) an ihrer Oberseite eine Griffmulde (23) und/oder an ihrer Unterseite mindestens eine Verstärkungsrippe (35) aufweist.

## Claims

1. Holding device (10) for a disc-type data carrier (13), in particular a compact disc (CD), comprising a housing base (11) to which a housing cover (12) is fitted so that it can swivel. and comprising a holding recess (15) which accommodates the data carrier (13), such that means (20, 18) are provided for retaining the data carrier (13) and the housing cover (12),
**characterised in that**
the retaining means comprise a retaining tab (20) that can be activated and a central holding element (18), the retaining tab (20) comprising holding elements (24, 25) such that, in the closed position, a first holding element (25) is in contact with the outside edge of the data carrier (13) and a second holding element (24) holds the housing cover (12) closed, and
the central holding element (18) is in contact with an inside edge area of the data carrier (13) and is so designed that when the retaining tab (20) is in its open position, the data carrier (13) can be released from the central holding element (18).

2. Holding device according to Claim 1,
**characterised in that**
the retaining tab (20) is positioned on an insert (14) which is held in the housing base (11) and in which the holding recess (15) is formed

3. Holding device according to Claim 2,
**characterised in that**
the retaining tab (20) is positioned elastically on the insert (14) and is preferably formed as one piece with the insert (14).

4. Holding device according to any of Claims 1 to 3,
**characterised in that**
the retaining tab (20) is positioned at a comer of the housing base (11) and is of approximately triangular shape.

5. Holding device according to any of Claims 1 to 4,
**characterised in that**
the first holding element (25) for the data carrier (13) is formed with a cross-section essentially the mirror-image of the central holding element (18).

6. Holding device according to any of Claims 1 to 5,
**characterised in that**
the edges of the holding elements (24, 25) are rounded

7. Holding device according to any of Claims 1 to 6,
**characterised in that**
in the central area of the holding recess (15) a guiding element (27) is provided, which has a sloping slide-ramp (28) for the data carrier (13).

8. Holding device according to Claim 7,
**characterised in that**
the guiding element (27) is positioned diametrically relative to the central holding element (18).

9. Holding device according to any of the preceding claims,
**characterised in that**
the retaining tab (20) has on its upper side a gripping hollow (23) and/or on its underside at least one reinforcing rib (35).

## Revendications

1. Dispositif de logement (10) pour un support de données (13) en forme de disque, en particulier pour un compact-disc (CD), comprenant un fond de boîtier (11) sur lequel est agencé mobile en pivotement un couvercle de boîtier, et un alvéole de logement (15) qui reçoit le support de données (13), des moyens de verrouillage (20, 18) étant prévus pour le support de données (13) et pour le couvercle (12) du boîtier, caractérisé en ce que les moyens de verrouillage comprennent une touche de verrouillage (20) pouvant être actionnée et un élément de retenue central (18), en ce que la touche de verrouillage (20) présente des éléments de retenue (24, 25), un premier élément de retenue (25) étant en appui contre le bord extérieur du support de données (13) et un deuxième élément de retenue (24) maintenant le couvercle (12) du boîtier fermé dans la position de fermeture de la touche de verrouillage, et
en ce que l'élément de retenue central (18) est en appui contre une région marginale intérieure du support de données (13) et est configuré de façon que, dans la position d'ouverture de la touche de verrouillage (20), le support de données (13) puisse être libéré de l'élément de retenue central (18).

2. Dispositif de logement selon la revendication 1, caractérisé en ce que la touche de verrouillage (20) est prévue sur une insertion (14) qui est logée dans le fond (11) du boîtier et sur laquelle l'alvéole de logement (15) est formé.

3. Dispositif de logement selon la revendication 2, caractérisé en ce que la touche de verrouillage (20) est agencée élastiquement sur l'insertion (14) et est de préférence formée en une seule pièce avec l'insertion (14).

4. Dispositif de logement selon une des revendications 1 - 3, caractérisé en ce que la touche de verrouillage (20) est disposée dans une région d'angle du fond (11) du boîtier et présente une forme de base approximativement triangulaire.

5. Dispositif de logement selon une des revendications 1- 4, caractérisé en ce que le premier élément de retenue (25) pour le support de données (13) est d'une configuration en coupe qui est sensiblement symétrique de celle de l'élément de retenue central (18).

6. Dispositif de logement selon une des revendications 1-5, caractérisé en ce que la région marginale des éléments de retenue (24-25) présente une arête extérieure arrondie.

7. Dispositif de logement selon une des revendications 1-6, caractérisé en ce que, dans la région centrale de l'alvéole de logement (15), est prévu un élément de guidage (27) qui possède une rampe de glissement oblique (28) pour le support de données (13).

8. Dispositif de logement selon la revendication 7, caractérisé en ce que l'élément de guidage (27) est diamétralement opposé à l'élément de retenue central (18).

9. Dispositif de logement selon une des revendications précédentes, caractérisé en ce que la touche de verrouillage (20) présente un creux de prise (23) sur sa face supérieure et/ou au moins une nervure de renforcement (35) sur sa face inférieure.
